# EUROPÄISCHE PATENTANMELDUNG

(11) **EP 4 029 637 A1**
(43) Veröffentlichungstag der Anmeldung: **20.07.2022**
(21) Anmeldenummer: 21193816.2
(22) Anmeldetag: 30.08.2021
(51) Int. Cl.: B23C 1/12, B23Q 1/54, B23Q 16/10

(54) **FRÄSKOPF MIT HOHER GENAUIGKEIT, FRÄSMASCHINE MIT EINEM FRÄSKOPF UND VERFAHREN ZUR POSITIONIERUNG EINES FRÄSKOPFS MIT HOHER GENAUIGKEIT**

(30) Priorität: 31.08.2020 DE 102020122766; 08.09.2020 DE 102020123434
(71) Anmelder: SHW Werkzeugmaschinen GmbH, 73433 Aalen (DE)
(72) Erfinder: Werner, Alexander, 73463 Westhausen (DE); Egetemeir, Robin, 73485 Unterschneidheim (DE)
(74) Vertreter: Misselhorn, Hein-Martin

(57) **Zusammenfassung**

Die Erfindung betrifft einen Fräskopf für eine Werkzeugmaschine (3), insbesondere Fräsmaschine, mit einem Mittenabschnitt (5) und einem Werkzeugabschnitt (4), wobei der Mittenabschnitt (5) mit dem Werkzeugabschnitt (4) über eine erste Kupplung (12) verbunden ist, wobei die erste Kupplung (12) einen ersten oberen Ring (13), einen ersten unteren Ring (14) und einen ersten Zwischenring (15) umfasst, wobei zwischen dem ersten oberen Ring (13) und dem ersten unteren Ring (14) der erste Zwischenring (15) angeordnet ist, wobei in einer ersten Arbeitsposition (16) die erste Kupplung (12) eingekuppelt ist, so dass in der ersten Arbeitsposition (16) eine drehfeste Verbindung zwischen Mittenabschnitt (5) und Werkzeugabschnitt (4) hergestellt ist, wobei in einer ersten Kuppelposition (17) die erste Kupplung (12) ausgekuppelt ist, so dass in der ersten Kuppelposition (17) der Mittenabschnitt (5) relativ zum Werkzeugabschnitt (4) drehbar ist, wobei in der ersten Kuppelposition (17) der erste oberer Ring (13) von einem ersten Motor (6) drehbar ist, und wobei in der ersten Kuppelposition (17) der erste Zwischenring (15) von einem zweiten Motor (18) drehbar ist.

## Beschreibung

Die Erfindung betrifft einen Fräskopf für eine Werkzeugmaschine, insbesondere Fräsmaschine, eine Fräsmaschine mit einem Fräskopf und ein Verfahren zur Positionierung eines Fräskopfs.

Im Stand der Technik werden zwei Teile, die in verschiedenen, einstellbaren Winkelstellungen fest miteinander verbindbar sein sollen und die große Kräfte und/oder Momente wie beispielsweise beim Fräsen übertragen sollen, meist über eine Kupplung in Form einer sogenannten Hirthverzahnung miteinander verbunden. Die Kupplung in Form einer Hirthverzahnung zeichnet sich dadurch aus, dass ein oberer Ring und ein unterer Ring vorgesehen sind. Zwischen oberem und unterem Ring ist ein Zwischenring angeordnet, wobei der erste Zwischenring mit einer Anzahl O1 Zähnen über eine erste obere Verzahnung mit dem ersten oberen Ring verzahnt ist, und wobei der erste Zwischenring mit einer Anzahl U1 Zähnen über eine erste untere Verzahnung mit dem ersten unteren Ring verzahnt ist, und wobei sich aus der Differenz aus den Winkeln zwischen den Zähnen der oberen Verzahnung und der unteren Verzahnung, also 360°/O1 - 360°/U1, eine Teilung ergibt. Zweckmäßig unterscheidet sich die Anzahl O1 der Zähne der ersten oberen Verzahnung von der Anzahl U1 der Zähne der unteren Verzahnung.

In einer ersten Arbeitsposition ist die erste Kupplung eingekuppelt und der erste Zwischenring ist insbesondere drehfest mit dem ersten unteren Ring und insbesondere drehfest mit dem ersten oberen Ring verbunden, so dass in der ersten Arbeitsposition eine drehfeste Verbindung zwischen den beiden Teilen hergestellt ist.

Um eine gewünschte Relativposition der Teile relativ zueinander einstellen zu können, wird üblicherweise in einem ersten Schritt der erste oberer Ring vom ersten Zwischenring entkuppelt, so dass der erste obere Ring in die gewünschte Position relativ zum ersten Zwischenring gedreht werden kann. Anschließend wird der erste Zwischenring mit dem ersten oberen Ring eingekuppelt und gleichzeitig wird der erste Zwischenring vom ersten unteren Ring entkoppelt, so dass in einem zweiten Schritt der erste Zwischenring in die gewünschte Position relativ zum ersten unteren Ring gedreht werden kann. Anschließend wird die Kupplung wieder vollständig eingekuppelt, das heißt in die erste Kuppelposition gebracht.

Der Vorteil an diesem Vorgehen ist der vergleichsweise einfache Aufbau der Kupplung. Allerdings sind insbesondere bei vergleichsweise großen und schweren Werkzeugen die auf die Kupplung wirkenden Kräfte und/oder Momente beim Ein- und Auskuppeln sowie die auf den Fräskopf insgesamt wirkenden Kräfte und/oder Momente, insbesondere im ausgekuppelten Zustand sehr groß. Das hat zur Folge, dass im Fräskopf sehr große Lager vorgesehen werden müssen, oder dass die großen Kräfte und Momente zu Ungenauigkeiten in der Positionierung führen können. Das wiederum kann negative Auswirkungen auf die Lebenszeit des Fräskopfs haben. Darüber hinaus ist die Schwenkzeit sehr lange, was wiederum die Fräszeit verlängert.

Es ist daher Aufgabe der Erfindung, einen Fräskopf für eine Werkzeugmaschine anzugeben, welcher mit hoher Genauigkeit positionierbar ist und welcher eine lange Lebensdauer aufweist und welcher insbesondere eine kurze Schwenkzeit aufweist.

Es ist daher Aufgabe der Erfindung, eine Fräsmaschine mit einem Fräskopf für eine Werkzeugmaschine anzugeben, welcher mit hoher Genauigkeit positionierbar ist und welcher eine lange Lebensdauer aufweist und welcher insbesondere eine kurze Schwenkzeit aufweist.

Es ist weiter Aufgabe der Erfindung, ein Verfahren zur Positionierung eines Fräskopfs für eine Werkzeugmaschine anzugeben, mit welchem mit hoher Genauigkeit positioniert werden kann und mit welchem eine lange Lebensdauer des Fräskopfs erreicht werden kann und mit welchem insbesondere eine kurze Schwenkzeit erreicht werden kann.

Die Aufgabe wird mit einem Fräskopf nach Anspruch 1 und/oder mit einer Fräsmaschine nach Anspruch 13 gelöst.

Bezüglich des Verfahrens wird die Aufgabe mit einem Verfahren nach Anspruch 14 gelöst.

Erfindungsgemäß umfasst der Fräskopf für eine Werkzeugmaschine, insbesondere für eine Fräsmaschine, einen Mittenabschnitt und einen Werkzeugabshnitt, wobei der Mittenabschnitt mit dem Werkzeugabschnitt über eine erste Kupplung verbunden ist. Die erste Kupplung umfasst einen ersten oberen Ring, einen ersten unteren Ring und einen ersten Zwischenring, wobei der erste obere Ring mit dem Werkzeugabschnitt oder mit dem Mittenabschnitt, bevorzugt mit dem Werkzeugabschnitt, insbesondere drehfest verbunden ist, wobei der erste untere Ring mit dem Mittenabschnitt oder mit dem Werkzeugabschnitt, bevorzugt mit dem Mittenabschnitt, insbesondere drehfest verbunden ist, und wobei zwischen dem ersten oberen Ring und dem ersten unteren Ring der erste Zwischenring angeordnet ist. In einer ersten Arbeitsposition ist die erste Kupplung eingekuppelt und der erste Zwischenring insbesondere drehfest mit dem ersten unteren Ring und insbesondere drehfest mit dem ersten oberen Ring verbunden, so dass in der ersten Arbeitsposition eine insbesondere drehfeste Verbindung zwischen Mittenabschnitt und Werkzeugabschnitt hergestellt ist. In einer ersten Kuppelposition ist die erste Kupplung ausgekuppelt, so dass der erste Zwischenring relativ zum ersten unteren Ring drehbar und relativ zum ersten oberen Ring drehbar ist. In der ersten Kuppelposition ist damit der Mittenabschnitt relativ zum Werkzeugabschnitt drehbar. In der ersten Kuppelposition ist der Mittenabschnitt bzw. der erste obere Ring von einem ersten Motor drehbar. In der ersten Kuppelposition ist der erste Zwischenring von einem zweiten Motor drehbar.

Mit dieser Vorrichtung muss ein vorderer Teil, also insbesondere der Werkzeugabschnitt, des Fräskopfs nicht mehr abgehoben werden, so dass trotz hoher Kräfte und/oder Momente auch im ausgekuppelten Zustand die Langlebigkeit des Fräskopfs sichergestellt werden kann und auch eine kurze Schwenkzeit umgesetzt werden kann. Die Schwenkzeit verkürzt sich insbesondere auch mithilfe der zwei Motoren, die die Ringe unabhängig voneinander antreiben können. Zweckmäßig bleibt die Position des Werkzeugabschnitts im ein- und im ausgekuppelten Zustand dieselbe, insbesondere natürlich abgesehen von einer möglichen Drehung des Werkzeugabschnitts. Insbesondere bleibt der Werkzeugabschnitt im ein- und im ausgekuppelten Zustand von einer translatorischen Bewegung verschont. Zweckmäßig bleibt die Position des Mittenabschnitts im ein- und im ausgekuppelten Zustand dieselbe, insbesondere abgesehen von einer möglichen Drehung des Mittenabschnitts. Insbesondere bleibt der Mittenabschnitt im ein- und im ausgekuppelten Zustand von einer translatorischen Bewegung verschont. Zweckmäßig bleibt die Position des Anbindungsabschnitts im ein- und im ausgekuppelten Zustand dieselbe, insbesondere abgesehen von einer möglichen Drehung des Anbindungsabschnitts. Insbesondere bleibt der Anbindungsabschnitt im ein- und im ausgekuppelten Zustand von einer translatorischen und insbesondere auch von einer schwenkenden und/oder drehenden Bewegung verschont. Es kann zweckmäßig sein, wenn der Mittenabschnitt und/oder Anbindungsabschnitt in diesem Ausführungsbeispiel eine translatorische Bewegung vom ein- zum ausgekuppelten Zustand erfahren. An dieser Stelle sei angemerkt, dass "erste" und "zweite" Welle so zu verstehen ist, dass hierbei die A-Achse und/oder die C-Achse umfasst sein kann.

Vorteilhaft ist der erste Motor der Hauptantrieb der Frässpindel. Damit treibt der erste Motor im eingekuppelten Zustand insbesondere ein am Fräskopf angeflanschtes Werkzeug an und im ausgekuppelten Zustand treibt der erste Motor den Werkzeugabschnitt (erste Kupplung) und/oder den Mittenabschnitt (zweite Kupplung) zum Verstellen der Hirth-Verzahnung an. Zweckmäßig ist der erste Motor in der Werkzeugmaschine angeordnet. Zweckmäßig ist der erste Motor außerhalb des Fräskopfs angeordnet. Zweckmäßig ist der zweite Motor im Fräskopf, insbesondere im Mittenabschnitt und/oder Anbindungsabschnitt angeordnet.

Zweckmäßig steht die Drehachse des ersten Motors in einem Winkel von etwa 45° zur Drehachse des zweiten Motors. Andere Winkel können zweckmäßig sein. Insbesondere ist ein Schneckengetriebe eingesetzt. Zweckmäßig in einer weiteren Variante verläuft die Drehachse des ersten Motors etwa parallel zur Drehachse des zweiten Motors, insbesondere in der ersten Arbeitsposition, zweckmäßig aber auch in der ersten Kuppelposition, wobei hier insbesondere ein Getriebe, beispielsweise 45°-Getriebe, erforderlich sein kann. Zweckmäßig ist der erste Motor der Hauptspindelmotor. Es kann aber auch zweckmäßig sein, wenn der erste Motor separat vom Hauptspindelmotor ist. In diesem Fall kann insbesondere der erste Motor im Fräskopf oder in der Fräsmaschine, zweckmäßig im Fräskopf, angeordnet sein, insbesondere im Anbindungsabschnitt oder im Mittenabschnitt.

Zweckmäßig kann der dritte Motor identisch zum ersten Motor sein. Das spart insbesondere Gewicht und Komplexität. Zweckmäßig sind dritter Motor zum ersten Motor identisch bei einem Orthogonalfräskopf. Besonders zweckmäßig sind dritter Motor und erster Motor unterschiedlich, insbesondere nicht identisch. Bei unterschiedlichen dritten und ersten Motoren kann eine Verstellung um die A-Achse und um die C-Achse zeitgleich erfolgen. Sind dritter und erster Motor hingegen identisch, so müssen A-Achse und C-Achse hintereinander verschwenkt werden.

Vorteilhaft ist die Position des ersten Zwischenrings in der ersten Kuppelposition verglichen mit der ersten Arbeitsposition parallel zur ersten Drehachse des Mittenabschnitts verschoben, insbesondere um etwa 3 mm verschoben. Es kann zweckmäßig sein, dass die Verschiebung in einem Bereich zwischen 1 mm und 10 mm, besonders zweckmäßig in einem Bereich zwischen 2 mm und 6 mm, ganz besonders zweckmäßig in einem Bereich zwischen 2,5 mm und 4 mm erfolgt. Damit erfolgen nur relativ kleine Verschiebungen, was wiederum die Zeit im ausgekuppelten Zustand verringert und auch was das Einwirken von Kräften und/oder insbesondere von Momenten verringert. Damit ist auch der Bauraum ideal ausgenutzt, so dass der Fräskopf kompakt baut.

Vorteilhaft ist die Position des Werkzeugabschnitts in der ersten Kuppelposition und in der ersten Arbeitsposition gleich. Damit muss ein vorderer Teil des Fräskopfs, insbesondere der Werkzeugabschnitt, nicht mehr abgehoben werden, so dass trotz hoher Kräfte und/oder Momente auch im ausgekuppelten Zustand die Langlebigkeit des Fräskopfs sichergestellt werden kann.

Vorzugsweise bewegt ein erster Kolben den ersten Zwischenring von der ersten Arbeitsposition in die erste Kuppelposition.

Zweckmäßig ist der Fräskopf ein 45°-Fräskopf. Zweckmäßig stehen die Drehachse des Mittenabschnitts und die Drehachse des Werkzeugabschnitts in einem Winkel von 45° zueinander.

Vorzugsweise umfasst der Fräskopf den Anbindungsabschnitt, wobei der Anbindungsabschnitt mit dem Mittenabschnitt über eine zweite Kupplung verbunden ist. Besonders vorteilhaft umfasst die Fräsmaschine den Anbindungsabschnitt, wobei der Anbindungsabschnitt mit dem Mittenabschnitt über die zweite Kupplung verbunden ist. Es kann zweckmäßig sein, dass der Mittenabschnitt eine Hülse umfasst, und insbesondere dass die Hülse drehfest mit dem Mittenabschnitt verbunden ist. Die Hülse ermöglicht ein Drehen in Form eines Drehlagers des Mittenabschnitts relativ zum Anbindungsabschnitt und damit des Fräskopfs relativ zur Fräsmaschine. Vorzugsweise umfasst die zweite Kupplung einen zweiten oberen Ring, einen zweiten unteren Ring und einen zweiten Zwischenring. Vorzugsweise ist der zweite obere Ring mit dem Anbindungsabschnitt insbesondere drehfest verbunden. Vorzugsweise ist der zweite untere Ring mit dem Mittenabschnitt insbesondere drehfest verbunden. Vorzugsweise ist zwischen dem zweiten oberen Ring und dem zweiten unteren Ring der zweite Zwischenring angeordnet. Vorzugsweise ist in einer zweiten Arbeitsposition die zweite Kupplung eingekuppelt und der zweite Zwischenring insbesondere drehfest mit dem zweiten unteren Ring und insbesondere drehfest mit dem zweiten oberen Ring verbunden, so dass in der zweiten Arbeitsposition eine insbesondere drehfeste Verbindung zwischen Mittenabschnitt und Anbindungsabschnitt hergestellt ist. Vorzugsweise ist in einer zweiten Kuppelposition die zweite Kupplung ausgekuppelt und der zweite Zwischenring relativ zum zweiten unteren Ring und insbesondere drehbar relativ zum zweiten oberen Ring drehbar, so dass in der zweiten Kuppelposition der Anbindungsabschnitt relativ zum Mittenabschnitt drehbar ist. Mit Mittenabschnitt relativ zum Anbindungsabschnitt ist gemeint, dass die beiden Abschnitte relativ zueinander verstellt werden.

Hierunter ist demnach auch zu verstehen, dass der Anbindungsabschnitt relativ zum Mittenabschnitt verstellbar ist. Vorzugsweise ist in der zweiten Kuppelposition der dritte obere Ring von einem dritten Motor drehbar. Vorzugsweise ist in der zweiten Kuppelposition der Zwischenring von einem vierten Motor drehbar.

Mit dieser Vorrichtung können gleichzeitig der zweite obere Ring und der zweite Zwischenring positioniert werden, so dass der ausgekuppelte Zustand nur sehr kurz ist. Das wiederum erhöht die Lebensdauer des Fräskopfs, da die wirkenden Kräfte und/oder Momente nur kurz wirken. Außerdem reduziert das Schwenkzeit und damit die Fräszeit bzw. Bearbeitungszeit am Werkstück.

Vorzugsweise verläuft die Drehachse des dritten Motors etwa parallel zur Drehachse des vierten Motors, insbesondere in der zweiten Arbeitsposition. Damit kann eine kompakte Bauweise erreicht werden, insbesondere können Getriebe, insbesondere Winkelgetriebe entfallen. Es kann zweckmäßig sein, dass ein Winkel zwischen den Drehachse vorgesehen ist. Insbesondere ist ein Schneckengetriebe vorgesehen. Zweckmäßig ist der dritte Motor in der Werkzeugmaschine angeordnet. Zweckmäßig ist der vierte Motor in der Werkzeugmaschine angeordnet. Zweckmäßig ist der dritte Motor außerhalb des Fräskopfs angeordnet. Zweckmäßig ist der vierte Motor außerhalb des Fräskopfs angeordnet. In einer weiteren Ausführung kann es vorteilhaft sein, wenn dritter und/oder vierter Motor im Fräskopf angeordnet sind.

Zweckmäßig ist die Position des zweiten unteren Rings in der zweiten Kuppelposition verglichen mit der zweiten Arbeitsposition parallel zur Längsachse, insbesondere Drehachse, des Anbindungsabschnitts, insbesondere parallel zur Drehachse des Mittenabschnitts, verschoben, insbesondere um etwa 6 mm verschoben. Es kann zweckmäßig sein, dass die Verschiebung in einem Bereich zwischen 1 mm und 15 mm, besonders zweckmäßig in einem Bereich zwischen 3 mm und 10 mm, ganz besonders zweckmäßig in einem Bereich zwischen 4 mm und 8 mm erfolgt. Zweckmäßig ist die Position des zweiten Zwischenrings in der zweiten Kuppelposition verglichen mit der zweiten Arbeitsposition parallel zur Längsachse, insbesondere Drehachse, des Anbindungsabschnitts, insbesondere parallel zur Drehachse des Mittenabschnitts, verschoben, insbesondere um etwa 3 mm verschoben ist. Es kann zweckmäßig sein, dass die Verschiebung in einem Bereich zwischen 1 mm und 10 mm, besonders zweckmäßig in einem Bereich zwischen 2 mm und 6 mm, ganz besonders zweckmäßig in einem Bereich zwischen 2,5 mm und 4 mm erfolgt. Damit erfolgen nur relativ kleine Verschiebungen, was wiederum die Zeit im ausgekuppelten Zustand verringert und auch was das Einwirken von Kräften und/oder insbesondere von Momenten verringert.

Vorteilhaft bewegt eine Feder den zweiten Zwischenring von der zweiten Arbeitsposition in die zweite Kuppelposition. Damit kann ein weiterer aktiver Antrieb, wie beispielsweise elektrischer, pneumatischer, hydraulischer Antrieb oder dergleichen, entfallen. Es kann zweckmäßig sein, wenn der zweite Zwischenring von einem elektrischen, pneumatischen, hydraulischen Antrieb oder dergleichen bewegbar ist.

Erfindungsgemäß umfasst Fräsmaschine einen Fräskopf nach einem der Ansprüche 1 bis 12.

Zweckmäßig umfasst die Fräsmaschine den Anbindungsabschnitt. Es kann aber auch vorteilhaft sein, wenn der Fräskopf den Anbindungsabschnitt umfasst.

Erfindungsgemäß ist ein Verfahren zur Positionierung eines Fräskopfs nach einem der Ansprüche 1 bis 12 vorgesehen, welches mindestens einen, vorteilhaft mehrere Verfahrensschritte umfasst. Vorzugweise werden in der ersten Kuppelposition der erste obere Ring vom ersten Motor und der erste Zwischenring vom zweiten Motor, insbesondere zu einem Zeitpunkt zeitgleich, gedreht. Vorzugweise werden in der zweiten Kuppelposition der zweite obere Ring vom dritten Motor und der zweite Zwischenring vom vierten Motor, insbesondere zu einem Zeitpunkt zeitgleich, gedreht. Zweckmäßig finden erste und zweite Kuppelposition zeitgleich statt. Zweckmäßig können zeitgleich der erste obere Ring, der erste Zwischenring, der zweite obere Ring und der zweite Zwischenring gedreht werden. Damit drehen insbesondere alle vier Motoren gleichzeitig.

Damit kann die Positionierung sehr schnell erfolgen. Kräfte und Momente wirken im ausgekuppelten Zustand nur sehr kurz, was eine hohe Langlebigkeit des Fräskopfs zur Folge hat.

Vorteilhaft werden in der ersten Kuppelposition der erste obere Ring und der erste Zwischenring in entgegengesetzter Drehrichtung verstellt. Vorteilhaft werden in der zweiten Kuppelposition der zweite obere Ring und der zweite Zwischenring in entgegengesetzter Drehrichtung verstellt.Damit wird meist die Sollposition der Ringe schneller erreicht, als wenn die Ringe in gleicher Richtung drehen. Selbstverständlich kann es vorteilhaft sein, wenn die Ringe in gleicher Richtung drehen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Vorteilhafte Ausführungsbeispiele der Erfindung werden nachfolgende anhand der beiliegenden Figuren beschrieben. Es zeigen
Fig. 1 eine perspektivische Ansicht eines Fräskopfs,
Fig. 2 eine weitere perspektivische Ansicht des Fräskopfs,
Fig. 3 eine perspektivische Ansicht des Fräskopfs mit Teilen einer Fräsmaschine,
Fig. 4 eine Seitenansicht des Fräskopfs in einer ersten Stellung,
Fig. 5 eine Vorderansicht des Fräskopfs,
Fig. 6 eine Seitenansicht des Fräskopfs in einer zweiten Stellung,
Fig. 7 eine Schnittansicht des Fräskopfs,
Fig. 8 eine Schnittansicht des Fräskopfs mit Teilen der Fräsmaschine,
Fig. 9 eine im Vergleich zu Fig. 7 vergrößerte Schnittansicht des Fräskopfs,
Fig. 10 eine Schnittansicht des in Fig. 9 dargestellten Bereichs "Z" in einem geklemmten Zustand,
Fig. 11 eine Schnittansicht des in Fig. 9 dargestellten Bereichs "Z" in einem gelösten Zustand,
Fig. 12 eine Schnittansicht des in Fig. 9 dargestellten Bereichs "Y" in einem geklemmten Zustand, und
Fig. 13 eine Schnittansicht des in Fig. 9 dargestellten Bereichs "Y" in einem gelösten Zustand.

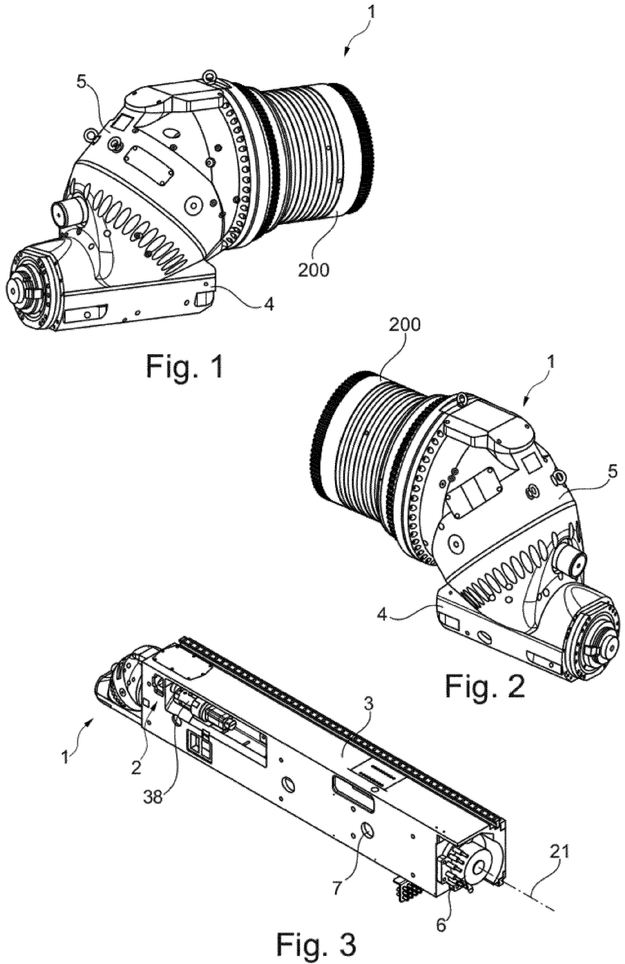

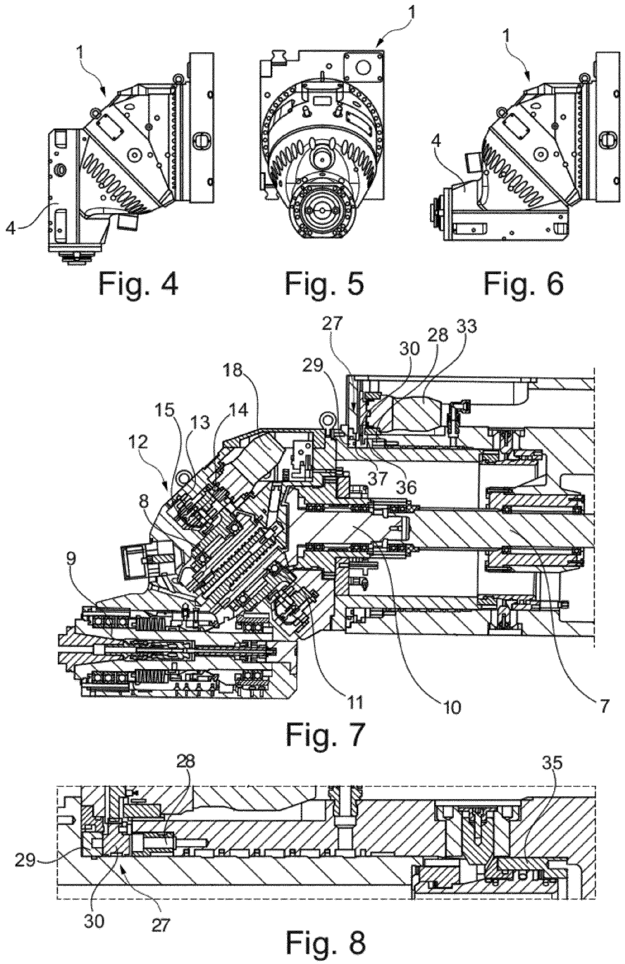

In einem Ausführungsbeispiel zeigen die Fig. 1 und 2 einen Fräskopf 1. Bei dem Fräskopf 1 handelt es sich im Ausführungsbeispiel um einen Universalfräskopf 45°. Der Fräskopf 1 ist über einen in Fig. 3 und 7 gezeigten Anbindungsabschnitt 2 an eine in Fig. 3 gezeigte Werkzeugmaschine 3 in Form einer Fräsmaschine anbindbar. Im Ausführungsbeispiel umfasst die Werkzeugmaschine 3 den Anbindungsabschnitt 2. Es kann in einem weiteren Ausführungsbeispiel zweckmäßig sein, wenn der Fräskopf 1 den Anbindungsabschnitt 2 umfasst. Im Ausführungsbeispiel umfasst die Werkzeugmaschine 3 den Anbindungsabschnitt 2, wobei am Fräskopf 1 eine Hülse 200 vorgesehen ist. Die Hülse 200 ist mit dem Anbindungsabschnitt 2 verbindbar. Die Hülse 200 ermöglicht eine drehbare Lagerung des Fräskopfs 1 relativ zur Werkzeugmaschine 3. Fig. 3 zeigt nur einen kleinen Teil bzw. nur einen kleinen Ausschnitt der Werkzeugmaschine 3.

Der Fräskopf 1 umfasst einen Werkzeugabschnitt 4. An den Werkzeugabschnitt 4 kann ein in den Figuren nicht gezeigtes Werkzeug, beispielsweise ein Fräser oder dergleichen, angebunden sein. Gegebenenfalls kann zur Anbindung des Werkzeugs an den Werkzeugabschnitt 4 des Fräskopfs 1 eine Werkzeugaufnahme erforderlich sein. Der Fräskopf 1 umfasst einen Mittenabschnitt 5. Der Mittenabschnitt 5 umfasst die Hülse 200, die insbesondere fest mit dem Mittenabschnitt 5 verbunden ist. Der Mittenabschnitt 5 verbindet den Anbindungsabschnitt 2 mit dem Werkzeugabschnitt 4. Der Mittenabschnitt 5 ist relativ zum Anbindungsabschnitt 2 dreh- bzw. schwenkbar. Der Werkzeugabschnitt 4 ist relativ zum Mittenabschnitt 5 dreh- bzw. schwenkbar. Durch die Dreh- bzw. Schwenkbarkeit sind unterschiedliche Positionen des Werkzeugs in der Fräsmaschine 3 realisierbar, so dass komplexe dreidimensionale Geometrien bzw. Werkstücke fräsbar sind. Der Mechanismus der Drehbarkeit wird weiter unten näher erläutert.

Zum Antrieb des Werkzeugs ist eine Kraftübertragung von der Fräsmaschine 3 über den Fräskopf 1 zum Werkzeug erforderlich.

Fig. 3 zeigt einen in der Fräsmaschine 3 angeordneten Hauptantrieb 6. Der Hauptantrieb 6 überträgt über eine Hauptantriebswelle 7 die Antriebskraft bzw. das Antriebsmoment zum Fräskopf 1. Innerhalb des Fräskopfs 1 wird die Antriebskraft bzw. das Antriebsmoment über eine in Fig. 7 gezeigte dritte Welle 10, vierte Welle 11, erste Welle 8 und zweite Welle 9 zum Werkzeug geleitet. Die dritte Welle 8 ist im Betriebszustand mit der Hauptantriebswelle 7 verbunden. Mit dem Ausgang der zweiten Welle 9 ist das Werkzeug wirkverbunden. Im Ausführungsbeispiel ist die erste Welle 8 und die vierte Welle 11 identisch. Zweckmäßig ist die erste Welle 8 mit der zweiten Welle 9 verbunden. Insbesondere kann es vorteilhaft sein, dass zwischen erster und zweiter Welle ein Getriebe, insbesondere Zahnradgetriebe, insbesondere Winkelgetriebe angeordnet ist. Es kann zweckmäßig sein, dass das Getriebe ein Untersetzungsgetriebe ist, oder dass das Getriebe ein Untersetzungsgetriebe und ein Winkelgetriebe ist. Es kann zweckmäßig sein, dass das Getriebe ein Winkelgetriebe mit Übersetzung 1:1 ist. Zweckmäßig ist die dritte Welle 10 mit der vierten Welle 11 verbunden. Insbesondere kann es vorteilhaft sein, dass zwischen dritter und vierter Welle ein Getriebe, insbesondere Zahnradgetriebe, insbesondere Winkelgetriebe angeordnet ist. Es kann zweckmäßig sein, dass das Getriebe ein Untersetzungsgetriebe ist, oder dass das Getriebe ein Untersetzungsgetriebe und ein Winkelgetriebe ist.

Die Fig. 4, 5 und 6 zeigen den Fräskopf 1 und dessen wesentliche Abmessungen, die somit Bestandteil der Beschreibung sind. Vorteilhaft können die Oberflächen der DIN ISO 1302 Reihe 2, die Allgemeintoleranzen der DIN ISO 2768 m k, die Formtoleranzen der DIN ISO 1101, die Lagetoleranzen der DIN ISO 1101, die Werkstückkanten der DIN ISO 13715 und der Urheberrechtsschutz der DIN ISO 16016 entsprechen. Es kann zweckmäßig sein, dass nur eine der vorgenannten Angaben zutrifft. Es kann auch zweckmäßig sein, dass eine Kombination der vorgenannten Angaben zutrifft. Fig. 4 und 6 unterscheiden sich im Wesentlichen dadurch, dass der Werkzeugabschnitt 4 um 180° gedreht ist.

Anhand der Fig. 7 bis 11 soll im Nachfolgenden der Kraftübertragungsmechanismus vom Hauptantrieb 6 (Fig. 3) auf das Werkzeug sowie der Mechanismus der Drehbarkeit erläutert werden.

Der Fräskopf 1 umfasst den Mittenabschnitt 5 und den Werkzeugabschnitt 4. Der Mittenabschnitt 5 ist im Betriebszustand drehfest verbunden mit dem Werkzeugabschnitt 4. Mit Betriebszustand ist gemeint, dass bei Anschluss des Fräskopfs 1 an die Fräsmaschine 3 und bei Anschluss eines Werkzeugs an den Fräskopf 1 ein Werkstück fräsbar ist.

Der Mittenabschnitt 5 ist mit dem Werkzeugabschnitt 6 verbunden. Die erste Kupplung 12 umfasst einen ersten oberen Ring 13, einen ersten unteren Ring 14 und einen ersten Zwischenring 15. Der erste obere Ring 13 ist mit dem Werkzeugabschnitt 6 drehfest verbunden. Der erste untere Ring 14 ist mit dem Mittenabschnitt 5 drehfest verbunden. Es versteht sich von selbst, dass in einem weiteren Ausführungsbeispiel der erste obere Ring 13 mit dem Mittenabschnitt 5 drehfest verbunden und der erste untere Ring 14 mit dem Werkzeugabschnitt 6 drehfest verbunden sein kann. Zwischen dem ersten oberen Ring 13 und dem ersten unteren Ring 14 ist der erste Zwischenring 15 angeordnet.

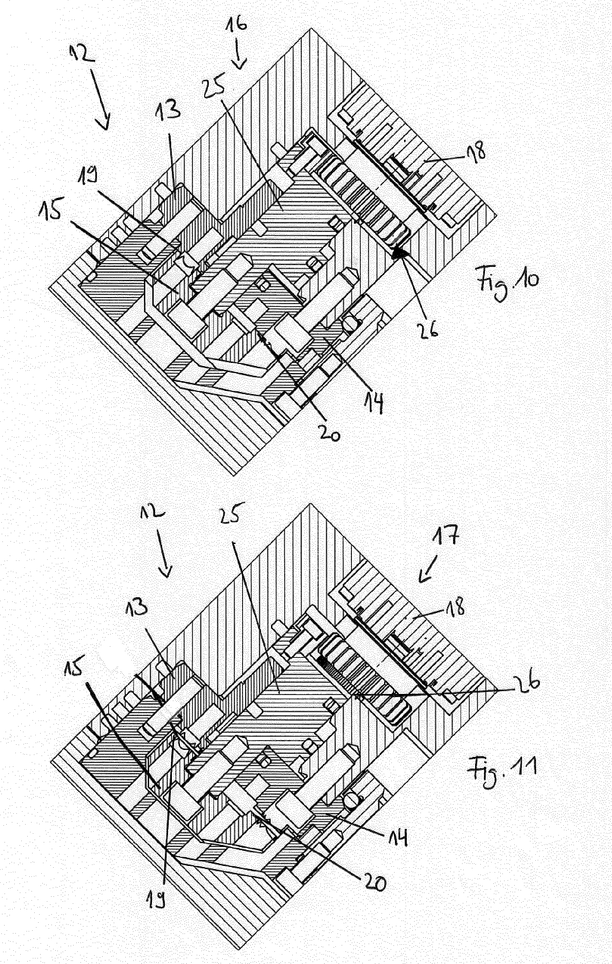

In einer in Fig. 10 gezeigten ersten Arbeitsposition 16 ist die erste Kupplung 12 eingekuppelt. Anders ausgedrückt ist die erste Kupplung 12 in der ersten Arbeitsposition 16 in einem geklemmten Zustand. In der ersten Arbeitsposition 16 ist der erste Zwischenring 15 drehfest mit dem ersten unteren Ring 13 und drehfest mit dem ersten oberen Ring 14 verbunden. Damit ist in der ersten Arbeitsposition 16 eine drehfeste Verbindung zwischen Mittenabschnitt 5 und Werkzeugabschnitt 6 hergestellt. In der ersten Arbeitsposition 16 ist damit der Betriebszustand hergestellt.

In einer in Fig. 11 gezeigten ersten Kuppelposition 17 ist die erste Kupplung 12 ausgekuppelt. Anders ausgedrückt ist die erste Kupplung 12 in der ersten Kuppelposition 17 in einem gelösten Zustand. Der erste Zwischenring 15 ist in der ersten Kuppelposition 17 relativ zum ersten unteren Ring 14 drehbar und relativ zum ersten oberen Ring 13 drehbar. Damit ist in der ersten Kuppelposition 17 der Mittenabschnitt 5 relativ zum Werkzeugabschnitt 4 (bzw. umgekehrt) drehbar.

Wie gut anhand eines Vergleichs der Figuren 10 und 11 ersichtlich ist, wird hierbei nur der Zwischenring 15 in seiner Position verschoben, wohingegen der erste obere Ring 13 und der erste untere Ring 14 die Position nicht ändern. Damit ist die Position des Werkzeugabschnitts 4 in der ersten Kuppelposition 17 und in der ersten Arbeitsposition 18 gleich. Damit können gute Lagerungen vorgesehen sein, so dass die Langlebigkeit des Fräskopfs 1 sichergestellt ist.

Zur Verschiebung des ersten Zwischenrings 15 von der ersten Arbeitsposition 16 in die erste Kuppelposition 17, und insbesondere auch zurück, ist ein erster Kolben 25 vorgesehen. Im Ausführungsbeispiel ist der erste Kolben 25 mit dem ersten Zwischenring 15 verschraubt. Der erste Kolben 25 verfährt in einer Richtung, die etwa parallel zur A-Achse 24 verläuft. Hierbei ist insbesondere die in den Figuren gezeigte A-Achse 24 gemeint. Die Bezeichnung von A-Achse und C-Achse ist abhängig vom Koordinatensystem der Werkzeugmaschine 3 und demnach können die Bezeichnungen in weiteren Ausführungsbeispielen insbesondere abweichen. Insbesondere könnte auch eine B-Achse gemeint sein. Die Verstellung des ersten Zwischenrings 15 erfolgt über ein erstes Antriebsritzel 26. Das Antriebsritzel 26 überträgt die Kraft des zweiten Motors 18 über den ersten Kolben 25 auf den ersten Zwischenring 15 in der ersten Kuppelposition 17 (Fig. 10). Das Antriebsritzel 26 entkoppelt in der ersten Arbeitsposition 16 den zweiten Motor 18 vom ersten Kolben 25 (Fig. 11). Die Position des ersten Zwischenrings 15 in der ersten Kuppelposition 17 ist verglichen mit Position des ersten Zwischenrings 15 in der ersten Arbeitsposition 16 parallel zur ersten Drehachse der ersten Welle 8 bzw. insbesondere der Dreh-/Schwenkachse des Mittenabschnitts 5, also parallel zur A-Achse 24, um etwa 3 mm verschoben. Der erste Kolben 25 verfährt also um etwa 3 mm.

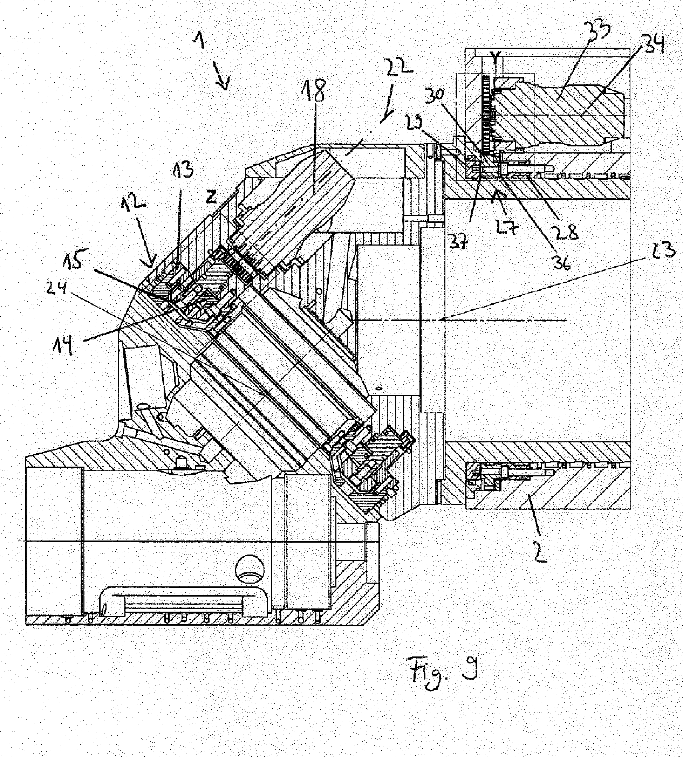

In der ersten Kuppelposition 17 ist die erste Welle 8 von einem ersten in Fig. 3 gezeigten Motor 6 drehbar. Im Ausführungsbeispiel ist der erste Motor 6 der Hauptantrieb 6. Der erste Motor 6 ist hierbei in der Werkzeugmaschine 3 angeordnet. In der ersten Kuppelposition 17 ist der erste Zwischenring 15 von einem in Fig. 7 und 9 gezeigten zweiten Motor 18 drehbar. Der zweite Motor 18 ist hierbei im Fräskopf 1, insbesondere im Mittenabschnitt 5 des Fräskopfs 1 angeordnet.

Der erste Zwischenring 15 ist in der in Fig. 10 gezeigten ersten Arbeitsposition 16 mit einer Anzahl O1 Zähnen über eine erste obere Verzahnung 19 mit dem ersten oberen Ring 13 verzahnt. Der erste Zwischenring 15 ist in der ersten Arbeitsposition 16 mit einer Anzahl U1 Zähnen über eine erste untere Verzahnung 20 mit dem ersten unteren Ring 14 verzahnt.

Aus der Differenz aus den Winkeln zwischen den Zähnen O1 der ersten oberen Verzahnung 19 und der ersten unteren Verzahnung 20, also 360°/O1 - 360°/U1, ergibt sich eine Teilung. Die Anzahl O1 der Zähne der ersten oberen Verzahnung 19 beträgt im Ausführungsbeispiel 360. Damit kann über die erste obere Verzahnung 19 der Mittenabschnitt 5 zum Werkzeugabschnitt 4 mindestens um 1° verstellt werden. Hierbei wird der Mittenabschnitt 5 zum Werkzeugabschnitt 4 um genau einen Zahn der ersten oberen Verzahnung 19 verdreht. Damit ist gewährleistet, dass Winkelverstellungen um 1° unter Vernachlässigung der Maschinengenauigkeit immer exakt abbildbar sind, also ohne einen mathematischen Fehler. Im Übrigen muss hierbei der erste Zwischenring 15 nicht geschwenkt bzw. gedreht werden.

Die Anzahl U1 der Zähne der ersten unteren Verzahnung 20 liegen in einem Bereich zwischen 199 und 357 oder zwischen 363 und 401 liegt. Jedenfalls ergibt die Teilung eine Zahl mit unendlich vielen Dezimalstellen.

Im Ausführungsbeispiel ist die Anzahl U1 der Zähne der unteren Verzahnung 353. Bei einer Kombination von 360 Zähnen der ersten oberen Verzahnung 19 mit 353 Zähnen der ersten unteren Verzahnung 20 ergibt sich eine Teilung von 360°/360 - 360°/353, also von etwa 0,0198300. Würde man konventionell verfahren, so würde dies bedeuten, dass bei dieser Kombination der Fräskopf 1 auf etwa 0,02° positionierbar ist mit einem Fehler von etwa 0,00017°, der sich aus der Differenz aus dem Soll von 0,02° abzüglich der Teilung von etwa 0,0198300° ergibt.

In vorliegendem Ausführungsbeispiel jedoch wird nun die Teilung bzw. die Kombination von den Zähnezahlen 360 und 353 nicht konventionell genutzt, sondern der entstehende Fehler von etwa 0,00017° wird so ausgenutzt, dass eine Positionierung auf etwa 0,01° erreicht werden kann. Denn nach diesem Ausführungsbeispiel wird der Fehler von etwa 0,00017° nicht vernachlässigt, sondern geschickt aufaddiert, so dass eine Positionierung auf etwa 0,01° erreicht werden kann, und nicht lediglich auf 0,02° (bzw. etwa 0,0198300°) .

Soll beispielsweise eine Positionierung von 0,03° erfolgen, also der Werkezugabschnitt 4 um 0,03° relativ zum Mittenabschnitt 5 gedreht bzw. geschwenkt werden, so wird die erste untere Verzahnung 20 um 52 Zähne verstellt. Dies ergibt dann eine Verstellung um 360°/353 * 52, also etwa 53,0312°. Die erste obere Verzahnung 19 wird um 53 Zähne zurückgestellt. Dies ergibt eine Verstellung um 360°/360 * 53 Zähne = 53°. Insgesamt wurde damit der Werkezugabschnitt 4 um etwa 0,03° relativ zum Mittenabschnitt 5 gedreht, mit einem mathematischen Fehler von etwa 0,0012°.

Soll beispielsweise eine Positionierung von 0,83° erfolgen, also der Werkezugabschnitt 5 um 0,83° relativ zum Mittenabschnitt 5 gedreht bzw. geschwenkt werden, so wird die erste untere Verzahnung 20 um 294 Zähne verstellt. Dies ergibt dann eine Verstellung um 360°/353 * 294 also etwa 299,83003°. Die erste obere Verzahnung 19 wird um 299 Zähne zurückgestellt. Dies ergibt eine Verstellung um 360°/360 * 299 Zähne = 299°. Insgesamt wurde damit der Werkezugabschnitt 4 um etwa 0,83° relativ zum Mittenabschnitt 5 gedreht, mit einem mathematischen Fehler von etwa 0,00003°, was in guter Rundung 0,0000° entspricht.

Bei Einstellung auf 0,01° bei einer Zähnekombination von 360 mit 353 ergibt sich für sämtliche Winkel von 0,00° bis 360,00° ein mathematischer Fehler im gesamten Bereich, der zwischen 0,0000° und etwa 0,0014° liegt. Der mathematische Fehler liegt zweckmäßig innerhalb der Maschinengenauigkeit. Damit ergibt sich im Ausführungsbeispiel nicht nur eine Teilung, die kleiner 0,02° ist. Sondern es ergibt sich im Ausführungsbeispiel eine maximale Abweichung zwischen Sollposition und Istposition, die bei etwa 0,0015° liegt, insbesondere ist die maximale Abweichung kleiner als etwa 0,0015°.

Wie gut in Fig. 3 zu sehen ist, dreht der erste Motor 6 um eine Drehachse 21. Die Drehachse 21 des ersten Motors 6 ist hierbei identisch mit einer sogenannten C-Achse 23, wie sie in Fig. 9 gezeigt ist. Der zweite Motor 18 dreht um eine Drehachse 22. Die Drehachse 22 des zweiten Motors 18 liegt parallel zu einer sogenannten A-Achse 24. Die A-Achse 24 ist die Achse, um welche sich die erste Welle 8 bzw. der Werkzeugabschnitt 4 dreht, also insbesondere identisch mit der Drehachse der ersten Welle 8 bzw. der Drehachse des Werkzeugabschnitts 4. Im Ausführungsbeispiel steht die Drehachse 21 des ersten Motors 6 in einem Winkel von 45° auf der Drehachse 22 des zweiten Motors 18. Im Ausführungsbeispiel steht damit die C-Achse 23 in einem Winkel von 45° auf der A-Achse 24. Es handelt sich somit um einen 45°-Fräskopf. Insbesondere ist die erste Welle 8 mit der dritten Welle 10 über ein Getriebe, insbesondere Zahnradgetriebe drehfest verbunden, und insbesondere ist die erste Welle 8 und die vierte Welle 10 identisch.

Die vorgenannten Ausführungen haben sich im Wesentlichen mit der Drehbarkeit des Werkzeugabschnitts 4 relativ zum Mittenabschnitt 5 bezogen. Im Nachfolgenden soll anhand der Figuren 7 bis 9, 12 und 13 die Drehbarkeit des Mittenabschnitts 5 relativ zum Anbindungsabschnitt 2 beschrieben werden.

Die Werkzeugmaschine 3umfasst den Anbindungsabschnitt 2. Der Anbindungsabschnitt 2 ist mit dem Mittenabschnitt 5 des Fräskopfs 1 über eine zweite Kupplung 27 verbunden ist. Die zweite Kupplung 27 umfasst einen zweiten oberen Ring 28, einen zweiten unteren Ring 29und einen zweiten Zwischenring 30. Der zweite obere Ring 28 ist mit dem Anbindungsabschnitt 2 drehfest verbunden. Der zweite untere Ring 29 ist mit dem Mittenabschnitt 5 drehfest verbunden. Zwischen dem zweiten oberen Ring 28 und dem zweiten unteren Ring 29 ist der zweite Zwischenring 30 angeordnet.

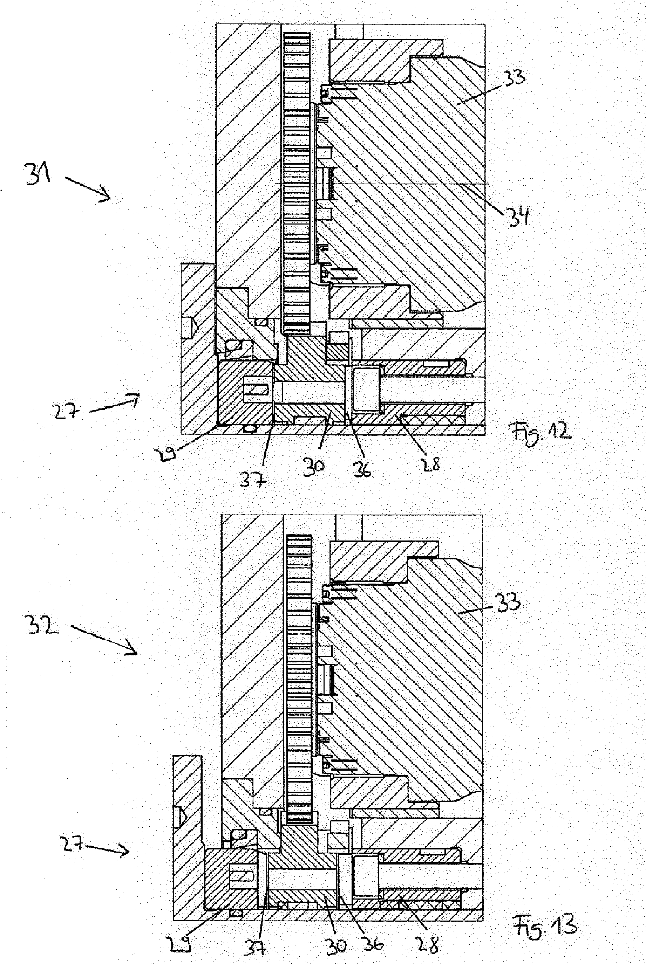

In einer in Fig. 12 gezeigten zweiten Arbeitsposition 31 ist die zweite Kupplung 27 eingekuppelt. In der zweiten Arbeitsposition 31 ist der zweite Zwischenring 30 drehfest mit dem zweiten unteren Ring 29 und drehfest mit dem zweiten oberen Ring 28 verbunden, so dass in der zweiten Arbeitsposition 31 eine drehfeste Verbindung zwischen Mittenabschnitt 5 und Anbindungsabschnitt 2 hergestellt ist. In einer in Fig. 13 gezeigten zweiten Kuppelposition 32 ist die zweite Kupplung 27 ausgekuppelt. Der zweite Zwischenring 30 ist relativ zum zweiten unteren Ring 28 drehbar und relativ zum zweiten oberen Ring 29 drehbar, so dass in der zweiten Kuppelposition 32 der Mittenabschnitt 5 relativ zum Anbindungsabschnitt 2 drehbar ist. In der zweiten Kuppelposition 32 ist der zweite obere Ring 28 von einem in Fig. 3 gezeigten dritten Motor 38 drehbar angetrieben. In der zweiten Kuppelposition 32 ist der zweite Zwischenring 30 von einem vierten Motor 34 drehbar angetrieben. Es versteht sich im Übrigen von selbst, dass die zweite Kupplung 27 und/oder Teile der zweiten Kupplung 27 und/oder der dritte Motor 38 und/oder vierter Motor 33 und/oder Hauptantrieb 6 in der Fräsmaschine 3 anordenbar sein können. Es versteht sich weiter von selbst, dass der Anbindungsabschnitt 2 und/oder Teile des Anbindungsabschnitts 2 und/oder Teile der zweiten Kupplung 27 im Fräskopf 1 anordenbar sein können. Im Sinne der Erfindung kann in diesem Spezialfall der Begriff "Fräskopf" weit ausgelegt werden, so dass, auch wenn der Fräskopf 1 im von der Fräsmaschine 3 abgekoppelten Zustand zweite Kupplung 27 und/oder Teile der zweiten Kupplung 27 und/oder dritter Motor 38 und/oder vierter Motor 33 und/oder Hauptantrieb 6 körperlich nicht umfasst, diese für den Schwenkbetrieb der Mittenabschnitts 5 relativ zum Anbindungsabschnitt 2 erforderlichen Komponenten als zum Fräskopf 1 gehörend zu interpretieren sein können.

Der dritte Motor 38 ist im Ausführungsbeispiel separat zum Hauptantrieb 6. In einem weiteren Ausführungsbeispiel kann der dritte Motor 38 identisch zum Hauptantrieb 6 sein. Der dritte Motor 38 dreht parallel zu der C-Achse 23. Der vierte Motor 33 dreht um eine Drehachse 34. Die Drehachse 34 des vierten Motors 34 verläuft im Ausführungsbeispiel etwa parallel zur Drehachse des dritten Motors 38. In einem weiteren Ausführungsbeispiel kann die Drehachse 34 des vierten Motors 34 unparallel zur Drehachse des dritten Motors 38 verlaufen. Die Position des zweiten unteren Rings 29 ist in der in Fig. 13 gezeigten zweiten Kuppelposition 32 verglichen mit der in Fig. 12 gezeigten zweiten Arbeitsposition 31 parallel zur dritten Drehachse der dritten Welle 10 verschoben, insbesondere um etwa 6 mm verschoben. Die Position des zweiten Zwischenrings 30 ist in der zweiten Kuppelposition 32 verglichen mit der zweiten Arbeitsposition 31 parallel zur dritten Drehachse der dritten Welle 10 bzw. des Anbindungsabschnitts 2 verschoben ist, insbesondere um etwa 3 mm verschoben. Die dritte Drehachse der dritten Welle 10 bzw. des Anbindungsabschnitts 2 entspricht im Ausführungsbeispiel der C-Achse 23. Die Verschiebung erfolgt mithilfe eines in Fig. 8 gezeigten zweiten Kolbens 35. Darüber hinaus bewegt eine Feder den zweiten Zwischenring 30 von der zweiten Arbeitsposition 31 in die zweite Kuppelposition 32.

Der zweite Zwischenring 30 ist mit einer Anzahl O2 Zähnen über eine zweite obere Verzahnung 36 mit dem zweiten oberen Ring 28 verzahnt. Der zweite Zwischenring 30 ist mit einer Anzahl U2 Zähnen über eine zweite untere Verzahnung 37 mit dem zweiten unteren Ring 29 verzahnt. Aus der Differenz aus dem Winkel zwischen den Zähnen der zweiten oberen Verzahnung 36 und der zweiten unteren Verzahnung 37, also 360°/O2 - 360°/U2, eine zweite Teilung ergibt. Die Anzahl O2 der Zähne der zweiten oberen Verzahnung 36 beträgt im Ausführungsbeispiel 360. Die Anzahl U2 der Zähne der zweiten unteren Verzahnung 37 liegt im Ausführungsbeispiel zwischen 199 und 357 oder zwischen 363 und 401.

Die Teilung ist eine Zahl mit unendlich vielen Dezimalstellen. Die Anzahl U2 der Zähne der zweiten unteren Verzahnung 37 entspricht im Ausführungsbeispiel der Anzahl U1 der Zähne der ersten unteren Verzahnung 20. Im Ausführungsbeispiel entspricht die Anzahl U2 der Zähne der zweiten unteren Verzahnung 353.

Die Teilung ist eine Zahl mit unendlich vielen Dezimalstellen ist, wobei entweder die dritte Dezimalstelle und/oder die vierte Dezimalstelle der Teilung ungleich 0 ist. Zweckmäßig ist die dritte Dezimalstelle der Teilung 7, 8, 9, 0, 1, 2 oder 3. Zweckmäßig ist die vierte Dezimalstelle der Teilung 7, 8, 9, 0, 1, 2 oder 3 ist. Im Ausführungsbeispiel, bei einer Kombination von 360 mit 353 Zähnen, beträgt die dritte Dezimalstelle der Teilung 9 und die vierte Dezimalstelle der Teilung 8.

Die vorgenannten beiden Absätze beziehen sich im Direkten auf die erste Kupplung 12. Im Allgemeinen können sich die beiden vorgenannten Absätze selbstverständlich auch auf die zweite Kupplung 27 beziehen. Beansprucht wird demnach auch eine zweite Kupplung 27 mit den vorgenannten Merkmalen. Die zweite Teilung ist eine Zahl mit unendlich vielen Dezimalstellen. Die zweite Teilung ist eine Zahl mit unendlich vielen Dezimalstellen ist, wobei entweder die dritte Dezimalstelle und/oder die vierte Dezimalstelle der Teilung ungleich 0 ist. Zweckmäßig ist die dritte Dezimalstelle der Teilung 7, 8, 9, 0, 1, 2 oder 3. Zweckmäßig ist die vierte Dezimalstelle der Teilung 7, 8, 9, 0, 1, 2 oder 3 ist. Im Ausführungsbeispiel, bei einer Kombination von 360 mit 353 Zähnen, beträgt die dritte Dezimalstelle der Teilung 9 und die vierte Dezimalstelle der Teilung 8.

Insbesondere wird unabhängig von den Ansprüchen beansprucht: Fräskopf 1 für eine Werkzeugmaschine 3, insbesondere Fräsmaschine, insbesondere nach einem der Ansprüche 1 bis 7, mit einem Mittenabschnitt 5, wobei der Mittenabschnitt 5 mit einem Anbindungsabschnitt 2 über eine zweite Kupplung 27 verbindbar ist, wobei die zweite Kupplung 27 einen zweiten oberen Ring 28, einen zweiten unteren Ring 29 und einen zweiten Zwischenring 30 umfasst, wobei der zweite obere Ring 28 mit dem Anbindungsabschnitt 2 drehfest verbunden ist, wobei der zweite untere Ring 29 mit dem Mittenabschnitt 5 drehfest verbunden ist, und wobei zwischen dem zweiten oberen Ring 28 und dem zweiten unteren Ring 29 der zweite Zwischenring 30 angeordnet ist, wobei der zweite Zwischenring 30 mit einer Anzahl O2 Zähnen über eine zweite obere Verzahnung 36 mit dem zweiten oberen Ring 28 verzahnt ist, und wobei der zweite Zwischenring 30 mit einer Anzahl U2 Zähnen über eine zweite untere Verzahnung 37 mit dem zweiten unteren Ring 29 verzahnt ist, und wobei sich aus der Differenz aus den Winkeln zwischen den Zähnen der zweiten oberen Verzahnung 36 und der zweiten unteren Verzahnung 37, also 360°/O2 - 360°/U2, eine zweite Teilung ergibt, wobei die zweite Teilung eine Zahl mit unendlich vielen Dezimalstellen ist, und wobei entweder die dritte Dezimalstelle und/oder die vierte Dezimalstelle der Teilung ungleich 0 ist. Vorteilhaft umfasst die Fräsmaschine den Anbindungsabschnitt 2. Es kann zweckmäßig sein, wenn der Fräskopf 1 den Anbindungsabschnitt 2 umfasst.

Nachfolgend soll nochmals beispielhaft ein mögliches Verfahren beschrieben werden, wie der Fräskopf 1 positioniert werden kann.

Eine in den Figuren nicht gezeigte eine Steuereinheit vergleicht eine erste Istposition des Mittenabschnitts 5 relativ zum Werkzeugabschnitt 4 mit einer ersten Sollposition des Mittenabschnitts 5 relativ zum Werkzeugabschnitt 4. Die Istposition ist die Position, in der der Mittenabschnitt 5 relativ zum Werkzeugabschnitt 4 aktuell, also zum Ist-Zeitpunkt steht. Die Sollposition ist die Position, in der der Mittenabschnitt 5 relativ zum Werkzeugabschnitt 4 gebracht werden soll, um beispielsweise einen anderen Fräswinkel oder dergleichen anfahren zu können.

Die Steuereinheit berechnet unter Berücksichtigung der Teilung mindestens zwei, bevorzugt sämtliche, mögliche Realpositionen, wie der Mittenabschnitt 5 relativ zum Werkzeugabschnitt 4 in eine erste Realposition ausrichtbar ist. Unter Realposition ist die Position zu verstehen, die tatsächlich erreichbar ist. Die Steuereinheit wählt unter den berechneten möglichen Realpositionen die erste Realposition aus, bei der die geringste Abweichung zwischen erster Sollposition und erster Realposition besteht. Unter Heranziehung des obigen Beispiels einer Kupplung mit 360 und 353 Zähnen, so ist unter Sollposition beispielsweise 0,03° zu verstehen, wobei sich dann die Realposition von 0,0312° ergibt. Unter geringster Abweichung ist in diesem Beispiel zu verstehen, dass es keine Realposition gibt, die näher an der 0,03° Sollposition liegt, als die vorgenannte Realpoistion von 0,0312°.

Schließlich wird die erste Realposition des Mittenabschnitts 5 relativ zum Werkzeugabschnitt 4 (bzw. umgekehrt) eingestellt.

Zur Einstellung der ersten Realposition des Mittenabschnitts 5 relativ zum Werkzeugabschnitt 4 werden der erste obere Ring 13 und der erste Zwischenring 15 verstellt, und der erste obere Ring 13 und der erste Zwischenring 15 werden in entgegengesetzter Drehrichtung verstellt. Meist spart dies Zeit, so dass die Verstellung schneller erfolgt. Es kann zweckmäßig sein, wenn die Ringe in gleicher Drehrichtung verstellt werden. Insbesondere kann zweckmäßig sein, dass die Steuereinheit berechnet, welche Drehrichtung, also gleich- oder gegensinnig schneller ist, und die Steuereinheit dann die schnellere Drehrichtung auswählt.

Zur Einstellung der ersten Realposition wird der erste Zwischenring 15 soweit gedreht, dass bezüglich der Dezimalstellen, insbesondere der ersten Dezimalstelle, besonders bevorzugt der zweiten Dezimalstelle, der Abweichung zwischen erster Sollposition und erster Realposition die geringste Abweichung zwischen erster Sollposition und erster Realposition besteht. Zur Einstellung der ersten Realposition wird der erste obere Ring 13 soweit gedreht, dass bezüglich der Vorkommastellen der Abweichung zwischen erster Sollposition und erster Realposition die geringste Abweichung zwischen erster Sollposition und erster Realposition besteht. Damit ist ein guter Algorithmus vorgesehen, um die Ringe entsprechend drehen zu können.

Zur Einstellung der ersten Realposition wird der erste obere Ring 13 soweit gedreht, dass bezüglich der Dezimalstellen, insbesondere der ersten Dezimalstelle, besonders bevorzugt der zweiten Dezimalstelle, der Abweichung zwischen erster Sollposition und erster Realposition die geringste Abweichung zwischen erster Sollposition und erster Realposition besteht. Zur Einstellung der ersten Realposition wird der erste Zwischenring 15 soweit gedreht wird, dass bezüglich der Vorkommastellen der Abweichung zwischen erster Sollposition und erster Realposition die geringste Abweichung zwischen erster Sollposition und erster Realposition besteht.

Eine in den Figuren nicht gezeigte Steuereinheit, die bevorzugt identisch zur oben genannten Steuereinheit ist, vergleicht eine zweite Istposition des Anbindungsabschnitts 2 relativ zum Mittenabschnitt 5 mit einer zweiten Sollposition des Anbindungsabschnitts 2 relativ zum Mittenabschnitt 5. Die Steuereinheit berechnet unter Berücksichtigung der zweiten Teilung mindestens zwei, bevorzugt sämtliche, mögliche Realpositionen, wie der Anbindungsabschnitt 2 relativ zum Mittenabschnitt 5 in eine zweite Realposition ausrichtbar ist. Die Steuereinheit wählt unter den berechneten möglichen Realpositionen die zweite Realposition aus, bei der die geringste Abweichung zwischen zweiter Sollposition und zweiter Realposition besteht. Die zweite Realposition des Anbindungsabschnitts 2 relativ zum Mittenabschnitt 5 (bzw. umgekehrt) wird eingestellt. Im Übrigen können sich die Verfahrensschritte von erster Kupplung 12 und zweiter Kupplung 27 ähnlich, insbesondere identisch, sein.

In der ersten Kuppelposition 17 werden der erste obere Ring 13 vom ersten Motor 6 und der erste Zwischenring 15 vom zweiten Motor 18, insbesondere zeitgleich, gedreht. In der zweiten Kuppelposition 32 werden der zweite obere Ring 28 vom dritten Motor 38 und der zweite Zwischenring 30 vom vierten Motor 33, insbesondere zeitgleich, gedreht. In der ersten Kuppelposition 17 werden der erste obere Ring 13 und der erste Zwischenring 15 in entgegengesetzter Drehrichtung verstellt werden. In der zweiten Kuppelposition 32 werden der zweite obere Ring 28 und der zweite Zwischenring 30 in entgegengesetzter Drehrichtung verstellt.

Ganz konkret kann eine Positionierung mithilfe der ersten Kupplung 12 wie folgt erfolgen:
- Der erste Kolben 25 der A-Achse 24 hebt um etwa 3 mm ab, so dass insbesondere die erste Kuppelposition 17 entsteht.
- Die Steuerung berechnet die Position des ersten Zwischenrings 15 mit der geringsten Abweichung.
- Es erfolgt die Positionierung des Werkzeugabschnitts 4 über den Hauptantrieb 6.
- Insbesondere kann eine mögliche eingradige Positionierung über den Hauptantrieb 6 bei einer Zähnezahl von 360 erfolgen.
- Zeitgleich erfolgt die Positionierung des ersten Zwischenrings 15 über das erste Antriebsritzel 26 des ersten Kolbens 25.
- Sobald die beiden Positionen erreicht wurden, zieht der erste Kolben 25 wieder in die Hirthverzahnung ein, so dass insbesondere die erste Arbeitsposition 16 entsteht.
- Für eine ganzgradige Positionierung des Werkzeugabschnitts 4, insbesondere bei einer Zähnezahl von 360 der ersten oberen Verzahnung 19, muss der erste Zwischenring 15 nicht geschwenkt werden.

Ganz konkret kann eine Positionierung mithilfe der zweiten Kupplung 27 wie folgt erfolgen:
- Die Fräskopfaufnahme hebt um etwa 6 mm ab, der zweite Zwischenring 30 hebt über Federn um etwa 3 mm ab, so dass insbesondere die zweite Kuppelposition 32 entsteht.
- Die Steuerung berechnet die Position des zweiten Zwischenrings 30 mit der geringsten Abweichung.
- Es erfolgt die Positionierung des Mittenabschnitts 5 über den dritten Motor 38.
- Insbesondere kann eine mögliche eingradige Positionierung bei einer Zähnezahl von 360 über ein separates Schwenkgetriebe und/oder über den dritten Motor 38 erfolgen.
- Zeitgleich erfolgt die Positionierung des zweiten Zwischenrings 30 über das Antriebsritzel des vierten Motors 33.
- Sobald beide Positionen erreicht wurden, zieht der zweite Kolben 35 wieder in die Hirtverzahnung ein, so dass insbesondere die zweite Arbeitsposition 31 entsteht.
- Für eine ganzgradige Positionierung des Mittenabschnitts 5, insbesondere bei einer Zähnezahl von 360 der zweiten unteren Verzahnung 37, muss der Zwischenring 30 nicht geschwenkt werden.

Im Ausführungsbeispiel weist der Fräskopf 1 ein Klemmmoment A-Achse 24 von etwa 8000 Nm auf. Im Ausführungsbeispiel weist der Fräskopf 1 ein Klemmmoment der C-Achse 23 von etwa 8000 Nm auf. Im Ausführungsbeispiel weist der Fräskopf 1 ein Schwenkmoment des Antriebs, insbesondere vierter Motor 33, des Zwischenrings A-Achse 24 von etwa 54 Nm auf. Im Ausführungsbeispiel weist der Fräskopf ein Schwenkmoment des Antriebs des Zwischenrings C-Achse, insbesondere zweiter Motor 18, von etwa 54 Nm auf. Der erste Zwischenring 15 kann im Übrigen in Form einer Zahnringbrücke ausgebildet sein, wie beispielsweise gut in Fig. 9 zu sehen ist.

Unabhängig von den Ansprüchen wird Schutz beansprucht für die nachfolgenden Absätze.

Fräskopf für eine Werkzeugmaschine 3, insbesondere Fräsmaschine, mit einem Mittenabschnitt 5 und einem Werkzeugabschnitt 4, wobei der Mittenabschnitt 5 mit dem Werkzeugabschnitt 4 über eine erste Kupplung 12 verbunden ist, wobei die erste Kupplung 12 einen ersten oberen Ring 13, einen ersten unteren Ring 14 und einen ersten Zwischenring 15 umfasst, wobei der erste obere Ring 13 mit dem Mittenabschnitt 5 drehfest verbunden ist, wobei der erste untere Ring 14 mit dem Werkzeugabschnitt 4 drehfest verbunden ist, wobei zwischen dem ersten oberen Ring 13 und dem ersten unteren Ring 14 der erste Zwischenring 15 angeordnet ist, wobei in einer ersten Arbeitsposition 16 die erste Kupplung 12 eingekuppelt ist und der erste Zwischenring 15 drehfest mit dem ersten unteren Ring 14 und drehfest mit dem ersten oberen Ring 13 verbunden ist, so dass in der ersten Arbeitsposition 16 eine drehfeste Verbindung zwischen Mittenabschnitt 5 und Werkzeugabschnitt 4 hergestellt ist, wobei in einer ersten Kuppelposition 17 die erste Kupplung 12 ausgekuppelt ist und der erste Zwischenring 15 relativ zum ersten unteren Ring 14 drehbar und relativ zum ersten oberen Ring 13 drehbar ist, so dass in der ersten Kuppelposition 17 der Mittenabschnitt 5 relativ zum Werkzeugabschnitt 4 drehbar ist, wobei in der ersten Kuppelposition 17 der erste oberer Ring 13 von einem ersten Motor 6 drehbar ist, und wobei in der ersten Kuppelposition 17 der erste Zwischenring 15 von einem zweiten Motor 18 drehbar ist.

Fräskopf, wobei der Fräskopf 1 einen Anbindungsabschnitt 2 umfasst, wobei der Anbindungsabschnitt 2 mit dem Mittenabschnitt 5 über eine zweite Kupplung 27 verbunden ist, wobei die zweite Kupplung 27 einen zweiten oberen Ring 28, einen zweiten unteren Ring 29 und einen zweiten Zwischenring 30 umfasst, wobei der zweite obere Ring 28 mit dem Anbindungsabschnitt 2 drehfest verbunden ist, wobei der zweite untere Ring 29 mit dem Mittenabschnitt 5 drehfest verbunden ist, wobei zwischen dem zweiten oberen Ring 28 und dem zweiten unteren Ring 29 der zweite Zwischenring 30 angeordnet ist, wobei in einer zweiten Arbeitsposition 31 die zweite Kupplung 27 eingekuppelt ist und der zweite Zwischenring 30 drehfest mit dem zweiten unteren Ring 29 und drehfest mit dem zweiten oberen Ring 28 verbunden ist, so dass in der zweiten Arbeitsposition 31 eine drehfeste Verbindung zwischen Anbindungsabschnitt 2 und Mittenabschnitt 5 hergestellt ist, wobei in einer zweiten Kuppelposition 32 die zweite Kupplung 27 ausgekuppelt ist und der zweite Zwischenring 30 relativ zum zweiten unteren Ring 29 drehbar und relativ zum zweiten oberen Ring 28 drehbar ist, so dass in der zweiten Kuppelposition 32 der Anbindungsabschnitt 2 relativ zum Mittenabschnitt 5 drehbar ist, wobei in der zweiten Kuppelposition 32 der zweite obere Ring 28 von einem dritten Motor 38 drehbar ist, und wobei in der zweiten Kuppelposition 32 der zweite Zwischenring 30 von einem vierten Motor 33 drehbar ist.

Fräskopf, wobei die Position des zweiten unteren Rings 29 in der zweiten Kuppelposition 32 verglichen mit der zweiten Arbeitsposition 31 parallel zur Drehachse des Anbindungsabschnitts 2 verschoben ist, insbesondere um etwa 6 mm verschoben ist.

Fräskopf, wobei die Position des zweiten Zwischenrings 30 in der zweiten Kuppelposition 32 verglichen mit der zweiten Arbeitsposition 31 parallel zur Drehachse des Anbindungsabschnitts 2 verschoben ist, insbesondere um etwa 3 mm verschoben ist.

Fräskopf, wobei der Fräskopf 1 ein 45°-Fräskopf ist, insbesondere dass die Drehachse des Mittenabschnitts 5 und die Drehachse des Anbindungsabschnitts 2 in einem Winkel von 45° stehen.

## Patentansprüche

1. Fräskopf für eine Werkzeugmaschine (3), insbesondere Fräsmaschine, mit einem Mittenabschnitt (5) und einem Werkzeugabschnitt (4), wobei der Mittenabschnitt (5) mit dem Werkzeugabschnitt (4) über eine erste Kupplung (12) verbunden ist, wobei die erste Kupplung (12) einen ersten oberen Ring (13), einen ersten unteren Ring (14) und einen ersten Zwischenring (15) umfasst, wobei der erste obere Ring (13) mit dem Werkzeugabschnitt (4) oder dem Mittenabschnitt (5), bevorzugt mit dem Werkzeugabschnitt (4), drehfest verbunden ist, wobei der erste untere Ring (14) mit dem Mittenabschnitt (5) oder dem Werkzeugabschnitt (4), bevorzugt mit dem Mittenabschnitt (5), drehfest verbunden ist, wobei zwischen dem ersten oberen Ring (13) und dem ersten unteren Ring (14) der erste Zwischenring (15) angeordnet ist, wobei in einer ersten Arbeitsposition (16) die erste Kupplung (12) eingekuppelt ist und der erste Zwischenring (15) drehfest mit dem ersten unteren Ring (14) und drehfest mit dem ersten oberen Ring (13) verbunden ist, so dass in der ersten Arbeitsposition (16) eine drehfeste Verbindung zwischen Mittenabschnitt (5) und Werkzeugabschnitt (4) hergestellt ist,
wobei in einer ersten Kuppelposition (17) die erste Kupplung (12) ausgekuppelt ist und der erste Zwischenring (15) relativ zum ersten unteren Ring (14) drehbar und relativ zum ersten oberen Ring (13) drehbar ist, so dass in der ersten Kuppelposition (17) der Mittenabschnitt (5) relativ zum Werkzeugabschnitt (4) drehbar ist,
wobei in der ersten Kuppelposition (17) der erste obere Ring (13) von einem ersten Motor (6) drehbar ist, und wobei in der ersten Kuppelposition (17) der erste Zwischenring (15) von einem zweiten Motor (18) drehbar ist.

2. Fräskopf nach Anspruch 1, **dadurch gekennzeichnet, dass** der erste Motor (6) ein Hauptantrieb ist.

3. Fräskopf nach Anspruch 1 oder 2, **dadurch gekennzeichnet, dass**, insbesondere in der ersten Arbeitsposition (16), die Drehachse (21) des ersten Motors (6) in einem Winkel von 45° zur Drehachse (22) des zweiten Motors (18) steht.

4. Fräskopf nach einem der Ansprüche 1 bis 3, **dadurch gekennzeichnet, dass** die Position des ersten Zwischenrings (15) in der ersten Kuppelposition (17) verglichen mit der Position des ersten Zwischenrings (15) in der ersten Arbeitsposition (16) parallel zur Drehachse des Mittenabschnitts (5) verschoben ist, insbesondere um etwa 3 mm verschoben ist.

5. Fräskopf nach einem der Ansprüche 1 bis 4, **dadurch gekennzeichnet, dass** die Position des Werkzeugabschnitts (4) in der ersten Kuppelposition (17) und in der ersten Arbeitsposition (16) gleich ist.

6. Fräskopf nach einem der Ansprüche 1 bis 5, **dadurch gekennzeichnet, dass** ein erster Kolben (25) den ersten Zwischenring (15) von der ersten Arbeitsposition (16) in die erste Kuppelposition (17) bewegt.

7. Fräskopf nach einem der Ansprüche 1 bis 6, **dadurch gekennzeichnet, dass** der Fräskopf (1) an einen Anbindungsabschnitt (2) anbindbar ist, wobei der Anbindungsabschnitt (2) mit dem Mittenabschnitt (5) über eine zweite Kupplung (27) verbindbar ist, wobei die zweite Kupplung (27) einen zweiten oberen Ring (28), einen zweiten unteren Ring (29) und einen zweiten Zwischenring (30) umfasst, wobei der zweite obere Ring (28) mit dem Anbindungsabschnitt (2) drehfest verbunden ist, wobei der zweite untere Ring (29) mit dem Mittenabschnitt (5) drehfest verbunden ist, wobei zwischen dem zweiten oberen Ring (28) und dem zweiten unteren Ring (29) der zweite Zwischenring (30) angeordnet ist, wobei in einer zweiten Arbeitsposition (31) die zweite Kupplung (27) eingekuppelt ist und der zweite Zwischenring (30) drehfest mit dem zweiten unteren Ring (29) und drehfest mit dem zweiten oberen Ring (28) verbunden ist, so dass in der zweiten Arbeitsposition (31) eine drehfeste Verbindung zwischen Anbindungsabschnitt (2) und Mittenabschnitt (5) hergestellt ist,
wobei in einer zweiten Kuppelposition (32) die zweite Kupplung (27) ausgekuppelt ist und der zweite Zwischenring (30) relativ zum zweiten unteren Ring (29) drehbar und relativ zum zweiten oberen Ring (28) drehbar ist, so dass in der zweiten Kuppelposition (32) der Anbindungsabschnitt (2) relativ zum Mittenabschnitt (5) drehbar ist,
wobei in der zweiten Kuppelposition (32) der zweite obere Ring (28) von einem dritten Motor (38) drehbar ist, und wobei in der zweiten Kuppelposition (32) der zweite Zwischenring (30) von einem vierten Motor (33) drehbar ist.

8. Fräskopf nach Anspruch 7, **dadurch gekennzeichnet, dass** die Drehachse des dritten Motors (38) etwa parallel zur Drehachse des vierten Motors (33) verläuft.

9. Fräskopf nach Anspruch 7 oder 8, **dadurch gekennzeichnet, dass** die Position des zweiten unteren Rings (29) in der zweiten Kuppelposition (32) verglichen mit der zweiten Arbeitsposition (31) parallel zur Längsachse des Anbindungsabschnitts (2), insbesondere parallel zur Drehachse des Mittenabschnitts (5), verschoben ist, insbesondere um etwa 6 mm verschoben ist.

10. Fräskopf nach einem der Ansprüche 7 bis 9, **dadurch gekennzeichnet, dass** die Position des zweiten Zwischenrings (30) in der zweiten Kuppelposition (32) verglichen mit der zweiten Arbeitsposition (31) parallel zur Längsachse des Anbindungsabschnitts (2), insbesondere parallel zur Drehachse des Mittenabschnitts (5), verschoben ist, insbesondere um etwa 3 mm verschoben ist.

11. Fräskopf nach einem der Ansprüche 7 bis 10, **dadurch gekennzeichnet, dass** eine Feder den zweiten Zwischenring (30) von der zweiten Arbeitsposition (31) in die zweite Kuppelposition (32) bewegt.

12. Fräskopf nach einem der Ansprüche 1 bis 11, **dadurch gekennzeichnet, dass** der Fräskopf (1) ein 45°-Fräskopf ist, insbesondere dass die Drehachse des Mittenabschnitts (5) und die Drehachse des Werkzeugabschnitts (4) in einem Winkel von 45° stehen.

13. Fräsmaschine mit einem Fräskopf (1) nach einem der Ansprüche 1 bis 12.

14. Verfahren zur Positionierung eines Fräskopfs (1) nach einem der Ansprüche 1 bis 12,
wobei in der ersten Kuppelposition (17) der erste obere Ring (13) vom ersten Motor (6) und der erste Zwischenring (15) vom zweiten Motor (18), insbesondere zeitgleich, gedreht werden,
und/oder dass in der zweiten Kuppelposition (32) der zweite obere Ring (29) vom dritten Motor (38) und der zweite Zwischenring (30) vom vierten Motor (33), insbesondere zeitgleich, gedreht werden.

15. Verfahren zur Positionierung eines Fräskopfs nach Anspruch 14, **dadurch gekennzeichnet, dass** in der ersten Kuppelposition (17) der erste obere Ring (13) und der erste Zwischenring (15) in entgegengesetzter Drehrichtung verstellt werden,
und/oder dass in der zweiten Kuppelposition (32) der zweite obere Ring (28) und der zweite Zwischenring (30) in entgegengesetzter Drehrichtung verstellt werden.
